# EUROPEAN PATENT SPECIFICATION

(11) **EP 1 844 249 B1**
(45) Date of publication and mention of the grant of the patent: **07.06.2017**
(21) Application number: 06701709.5
(22) Date of filing: 02.02.2006
(51) Int. Cl.: F16F 7/104, F16F 15/02

(54) **A DEVICE FOR REDUCING VIBRATIONS AND SOUNDS**
VORRICHTUNG ZUR REDUZIERUNG VON VIBRATIONEN UND GERÄUSCHEN
DISPOSITIF DE REDUCTION DE VIBRATIONS ET DE SONS

(30) Priority: 02.02.2005 SE 0500245; 03.03.2005 SE 0500491
(43) Date of publication of application: 17.10.2007
(73) Proprietor: A2 Vibcon AB, 252 24 Helsingborg (SE)
(72) Inventor: GUSTAVSSON, Mats, S-252 50 Helsingborg (SE)
(74) Representative: Berglund, Stefan
(86) International application number: PCT/SE2006/000153
(87) International publication number: WO 2006/083222

(56) References cited:
- EP-A- 0 836 031
- EP-A1- 0 098 657
- EP-A2- 0 922 877
- DE-A1- 2 036 979
- US-A- 3 548 972
- US-A- 5 954 169
- US-A- 6 045 090
- US-A1- 2004 040 777
- US-A1- 2004 185 941

## Description

### THE BACKGROUND OF THE INVENTION AND PRIOR ART

The present invention refers to a device for reducing vibrations and sounds in a structure according to the preamble of claim 1.

In many various technical applications, such as in aircraft, motor vehicles, ships, various machines and industrial plants, it is desirable to reduce vibrations and sounds. Such vibrations or sounds can have one or several main fundamental frequencies. In aircraft, at least one fixed motor speed, which offers an economically advantageous balance between fuel cost and speed, is frequently utilized. This motor speed results in vibrations and sounds with a relatively well defined fundamental frequency. In order to reduce these vibrations, it is known to mount a large number of vibration absorber elements. The basic principal of these vibration absorber elements is to create a resonant system having a mass and spring connected to the object or the structure from which the vibration energy is to be absorbed. These vibration absorber elements are passive and tuned for an efficient absorption of vibrations and sounds having this defined fundamental frequency. US-A-2004/0134733 discloses such a passive vibration absorber.

In various aircraft contexts, for instance propeller-driven aeroplanes, two or several fixed motor speeds are frequently used during flight for optimising performance, fuel consumption or comfort at various flight states. These various motor speeds result in vibrations and sounds with two or several relatively well defined fundamental frequencies. The known passive vibration absorber elements give a poor effect when several motor speeds are used since they merely operate against one frequency.

In order to solve this problem, it is known to use, for instance, two different vibration absorber elements, which are tuned to a respective defined frequency. However, this increases the required quantity of absorber elements in an undesired manner. Furthermore, the absorber elements which do not respond to the actual frequency may instead result in an amplification of vibrations and sounds. Furthermore, it has been proposed to use instead adjustable absorber elements, i.e. vibration absorber elements which are adjustable to operate against several different frequencies. The known adjustable absorber elements require some kind of electric motor or any similar adjustment member for providing the desired adjustment. Furthermore, extensive wiring for current supply, and control equipment for the adjustment of the absorber elements are required. One example of such an adjustable absorber element is disclosed in US-A-5,954,169. More specifically, this document discloses a vibration absorber having a tuned mass which by means of a motor is displaceably provided in relation to a flexible plate. Other examples of adjustable absorber elements are disclosed in EP-A-922 877 and US-A-3,487,888. The Swedish patent application 0500245-6 discloses a similar device.

### SUMMARY OF THE INVENTION

The object of the invention is to provide a simple vibration absorber which is arranged to operate against different frequencies.

This object is achieved by the device initially defined, which is characterized in that the dynamic has differing mass-moment of inertia with respect to the two main axes, and that the dynamic element is rotatable in relation to the structure around the axis of rotation, which is perpendicular to the two main axes.

By means of such a device a resonant vibration absorber is achieved, which thanks to the rotatable dynamic element is adaptive. The dynamic element will adjust itself into such a rotary position that a maximum vibration amplitude is achieved for the swinging mass of the dynamic element at vibration excitation at, or in the proximity of, one of the resonance frequencies of the device. By means of the invention, a simple device is thus achieved, which without any actuating member can absorb two or several different vibration frequencies.

According to an embodiment of the invention, the spring element with a part thereof is fixedly mounted in relation to the structure.

According to a further embodiment of the invention, the two main axes are orthogonal with respect to the mass-moment of inertia.

According to a further embodiment of the invention, the dynamic element may be rotatably journalled on the primary connection element and may have a differing geometrical design along the two main axes.

According to a further embodiment of the invention, the device comprises two such dynamic elements, which are connected to a respective end of the primary connection element.

According to a further embodiment of the invention, the primary element forms two spring elements. In the latter case, the primary connection element may with a central part thereof be fixedly mounted in relation to the structure.

According to a further embodiment of the invention, the device comprises at least a further dynamic element, which is rotatably connected to a secondary connection element. Advantageously, the secondary connection element is rotatably connected to an outer end of the primary connection element. Furthermore, the device may comprise at least two further dynamic elements, which are rotatably connected to a respective secondary connection element, which in turn can be rotatably connected to a respective outer end of the primary connection element. Said further dynamic elements are advantageously rotatably journalled at a respective outer end of said secondary connection elements. Also said secondary connection elements may form spring elements.

According to a further embodiment, the device comprises a further spring element, which connects the primary connection element to the structure. The spring element may be designed to permit an energy-absorbing spring movement including bending, a longitudinal deformation and/or shearing of the spring element.

### BRIEF DESCRIPTION OF THE DRAWINGS

The present invention is now to be explained more closely by means of a description of various embodiments and with reference to the drawings attached hereto.
- Fig. 1: discloses a sideview of a first embodiment of a device according to the invention.
- Fig. 2: discloses a cross-section through a dynamic element of the device along the line II-II in fig. 1.
- Fig. 3: discloses a sideview of a second embodiment of a device according to the invention.
- Fig. 4: discloses a cross-section through a spring element having an alternative design.
- Fig. 5: discloses a sideview of a fifth embodiment of a device according to the invention.

### DETAILED DESCRIPTION OF VARIOUS EMBODIMENTS OF THE INVENTION

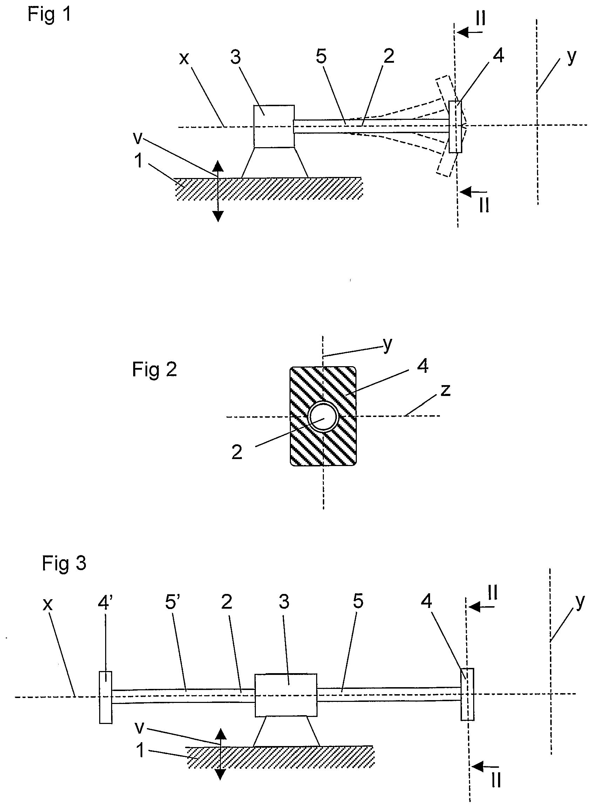

Fig. 1 discloses a first embodiment of a device according to the invention for reducing vibrations and sounds in a structure. This structure may be a vehicle, for instance an aircraft or a ship, or any other stationary structure, for instance a building, a machine tool or any structure where it is desirable to reduce vibrations.

The device according to the first embodiment comprises a primary connection element 2. The primary connection element 2 is in the first embodiment designed as an elongated rod which extends in a longitudinal direction. The primary connection element 2 is with a part thereof fixedly mounted in relation to the structure 1 via an attachment 3. In the first embodiment, the primary connection element 2 is with an end part fixedly connected to the attachment 3 and the structure 1.

The device also comprises a dynamic element 4, which has a determined mass-moment of inertia. The dynamic element 4 gives rise to forces of inertia when it is accelerated in a translation movement and a rotation movement. Forces of inertia are related to the mass and the mass-moment of inertia of the dynamic element. The dynamic element 4 extends along two main axes y and z, see fig. 2. The mass-moment of inertia is different with respect to the two main axes y and z, and more specifically the two main axes are orthogonal with respect to the mass-moment of inertia. The dynamic element 4 has a differing geometrical design, a differing mass distribution or a combination of these properties along the two main axes y and z. In the first embodiment, this is exemplified through a differing geometrical design with different dimensions of the dynamic element along the two main axes y and z, and more specifically, by the fact that the cross-section of the dynamic element 4 is wider along the main axis y than along the main axis z.

The dynamic element 4 is rotatable around an axis x of rotation, which substantially coincides with the longitudinal direction of the primary connection element 2 and which is perpendicular to the two main axes y and z. The dynamic element 4 may be rotatably journalled directly on the primary connection element 2. The dynamic element 4 may also be rotatably journalled on the primary connection element 2 by means of a rotary bearing, for instance in the form of a slide bearing or a roller bearing.

The primary connection element 2 forms a spring element 5 which is designed to permit an energy-absorbing spring movement through bending of the spring element 5, as is indicated in fig. 1 with dashed lines, when the structure 1 vibrates in the vibration direction v.

The device according to the first embodiment is adapted to absorb two different vibration frequencies through the rotation of the dynamic element 4 to an optimum position in relation to the primary connection element 2 with respect to the frequency with which the structure 1 vibrates.

Fig. 3 discloses a second embodiment of the invention. It is here to be noted that elements having substantially the same function have been provided with the same reference signs in all described embodiments. The device according to the second embodiment differs from the device according to the first embodiment in that it comprises two such dynamic elements 4, 4', which are connected to a respective end of the primary connection element 2. The two dynamic elements 4, 4' may be substantially equal to each other and to the dynamic element 4 in the first embodiment. In the second embodiment, the primary connection element 2 is with a central part thereof fixedly mounted in the attachment 3. The primary connection element 2 thus forms two spring elements 5, 5' having a respective dynamic element 4, 4'. The two spring elements 5, 5' and the two dynamic elements 4, 4' are substantially symmetrically designed and positioned with respect to the central attachment 3.

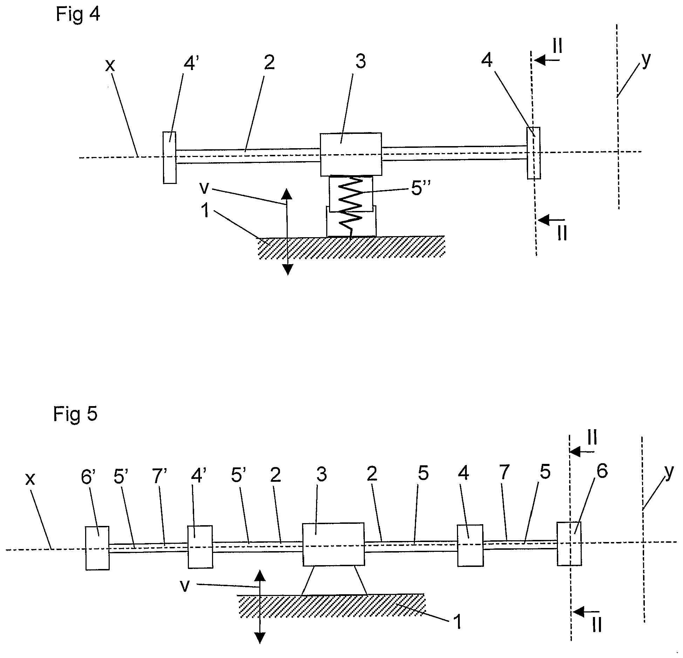

Fig. 4 discloses a third embodiment, which differs from the second embodiment in that a further spring element 5" is arranged between the attachment 3 and the structure 1. The combination of two spring elements 5, 5', 5" may then advantageously be used for improving the dynamic properties, such as fatigue strength and adaptation of the dissipation factor, of the vibration absorber.

Fig. 5 discloses a fifth embodiment of the invention, which differs from the remaining embodiments, especially the third embodiment, in that the device comprises two further dynamic elements 6, 6', which by means of a respective secondary connection element 7, 7' are connected to a respective outer end of the primary connection element 2. The two further dynamic elements 6, 6' are rotatable in relation to the respective secondary connection element 7, 7' in the same way as the dynamic elements 4, 4' are rotatable in relation to the primary connection element 2 in the fifth embodiment and the remaining embodiments. The secondary connection elements 7, 7' are furthermore advantageously rotatably connected to the primary connection elements 2, for instance by means of a suitable rotary bearing.

The two secondary connection elements 7, 7' are also designed as a respective elongated rod, which extends along the axis x of rotation and forms a respective spring element 5, 5'. These further spring elements 5, 5' permit an energy-absorbing spring movement through bending of the respective spring element 5, 5'.

The spring element 5, 5' and the dynamic element 4, 4' of the primary connection element 3 then form a first dynamic unit, whereas the spring element 5, 5' and the further dynamic elements 6, 6' of the secondary connection elements 7, 7' form a second dynamic unit. According to the fifth embodiment, a device is achieved, which can be adapted to 2², i.e. 4 different frequencies. It is to be noted that in principal it is possible to provide further dynamic elements which are rotatably connected to the outer ends of the secondary connection elements 7, 7'. In such away the number of dynamic units may be further increased, wherein the device can be adapted to 2^{N} different frequencies, where N is the number of dynamic units.

The device according to the invention will thus by itself provide a rotation of the dynamic elements 4, 4' around the axis x of rotation to an optimum position for different operation states. This adaptation takes place spontaneously without any particular, forced rotation of the dynamic elements 4, 4', thanks to the fact that the dynamic elements 4, 4' strive to reach resonance. According to a variant of the invention, some kind of actuating members may be provided for providing the desired rotation.

In this description, merely the fundamental frequency of the spring elements 5, 5' with the associated dynamic elements 4, 4' has been considered, i.e. a spring movement where all spring elements 5, 5' all dynamic elements 4, 4' and possible rotary bearings 7, 7' are moving in phase. Furthermore, it is assumed that the device according to figs. 3-5 are symmetrical with respect to the attachment 3. In a more advanced description of the function of the device, a plurality of fundamental frequencies and associated natural oscillation forms will be identified. Certain of these may be undesired and their negative influence may be limited or eliminated through a change of the geometry and/or the choice of material. Other resonances in addition to the fundamental resonance may be used for instance for simultaneous reduction of a fundamental tune and overtunes to a vibration.

The invention is not limited to the embodiments disclosed but may be varied and modified within the scope of the following claims. The embodiments disclosed may be combined with the embodiments and properties disclosed in the Swedish application 0500245-6.

## Claims

1. A device for reducing vibrations and sounds in a structure (1), comprising
at least one dynamic element (4), which extends along two main axes (y, z),
at least one spring element (5), which is connected to the dynamic element (4) and which is adapted to be connected to the structure (1), and
a primary connection element (2), which extends in parallel to the axis (x) of rotation and which forms the spring element (5, 5'), **characterized in that** the dynamic element has a differing mass-moment of inertia with respect to the two main axes (y, z), and
that the dynamic element (4) is rotatable in relation to the structure (1) around the axis (x) of rotation, which is perpendicular to the two main axes (y, z).

2. A device according to claim 1, **characterized in that** the spring element (5) with a part thereof is fixedly mounted in relation to the structure (1).

3. A device according to any one of claims 1 and 2, **characterized in that** the two main axes (y, z) are orthogonal with respect to the mass-moment of inertia.

4. A device according to any one of the preceding claims, **characterized in that** the dynamic element (4) is rotatably journalled on the primary connection element (2).

5. A device according to claim 4, **characterized in that** the dynamic element (4) has a different geometrical design along the two main axes (y, z).

6. A device according to any one of claims 4 and 5, **characterized in that** the dynamic element (4) has a differing mass distribution along the two main axes (y, z).

7. A device according to any one of the preceding claims, **characterized in that** the device comprises two such dynamic elements (4, 4'), which are connected to a respective end of the primary connection element (2).

8. A device according to any one of the preceding claims, **characterized in that** the primary connection element (2) forms two spring elements (5, 5').

9. A device according to any one of the preceding claims, **characterized in that** the primary connection element (2) with a central part thereof is fixedly mounted in relation to the structure (1).

10. A device according to any one of the preceding claims, **characterized in that** the device comprises at least a further dynamic element (6, 6'), which is rotatably connected to a secondary connection element (7, 7').

11. A device according to claim 10, **characterized in that** the secondary connection element (7, 7') is rotatably connected to an outer end of the primary connection element (2).

12. A device according to any one claims 10 and 11, **characterized in that** the device comprises at least two further dynamic elements (6, 6'), which are rotatably connected to a respective secondary connection element (7, 7').

13. A device according to claim 12, **characterized in that** the secondary connection elements (7, 7') are rotatably connected to a respective outer end of the primary connection element (2).

14. A device according to any one of claims 10 to 13, **characterized in that** said further dynamic elements (6, 6') are rotatably journalled at a respective outer end of said secondary connection elements (6, 6').

15. A device according to any one of claims 10 to 14, **characterized in that** said secondary connection elements (6. 6') form the spring element (5, 5').

16. A device according to any one of the preceding claims, **characterized in that** the device comprises a further spring element (5"), which connects the primary connection element (2) to the structure (1).

17. A device according to any one of the preceding claims, **characterized in that** the spring element (5) is designed to permit an energy-absorbing spring movement which includes bending of the spring element.

18. A device according to any one of the preceding claims, **characterized in that** the spring element (5) is designed to permit an energy-absorbing spring movement, which includes a longitudinal deformation of the spring element.

19. A device according to any one of the preceding claims, **characterized in that** the spring element (5) is designed to permit an energy-absorbing spring movement, which includes shearing of the spring element.

## Patentansprüche

1. Vorrichtung zur Reduzierung von Vibrationen und Geräuschen in einer Struktur (1), umfassend:
wenigstens ein dynamisches Element (4), das entlang zweier Hauptachsen (y, z) verläuft,
wenigstens ein Federelement (5), das mit dem dynamischen Element (4) verbunden und dazu eingerichtet ist, mit der Struktur (1) verbunden zu werden, und
ein primäres Verbindungselement (2), das parallel zur Drehachse (x) verläuft und das Federelement (5, 5') bildet,
**dadurch gekennzeichnet, dass** das dynamische Element bezüglich der zwei Hauptachsen (y, z) jeweils ein unterschiedliches Massenträgheitsmoment aufweist, und
dass das dynamische Element (4) bezüglich der Struktur (1) um die Drehachse (x), die senkrecht zu den zwei Hauptachsen (y, z) verläuft, drehbar ist.

2. Vorrichtung nach Anspruch 1, **dadurch gekennzeichnet, dass** das Federelement (5) mit einem Teil desselben bezüglich der Struktur (1) fest montiert ist.

3. Vorrichtung nach einem der Ansprüche 1 und 2, **dadurch gekennzeichnet, dass** die zwei Hauptachsen (y, z) senkrecht zum Massenträgheitsmoment verlaufen.

4. Vorrichtung nach einem der vorhergehenden Ansprüche, **dadurch gekennzeichnet, dass** das dynamische Element (4) drehbar auf dem primären Verbindungselement (2) gelagert ist.

5. Vorrichtung nach Anspruch 4, **dadurch gekennzeichnet, dass** das dynamische Element (4) entlang der zwei Hauptachsen (y, z) jeweils eine unterschiedliche geometrische Gestaltung aufweist.

6. Vorrichtung nach einem der Ansprüche 4 und 5, **dadurch gekennzeichnet, dass** das dynamische Element (4) entlang der zwei Hauptachsen (y, z) jeweils eine unterschiedliche Massenverteilung aufweist.

7. Vorrichtung nach einem der vorhergehenden Ansprüche, **dadurch gekennzeichnet, dass** die Vorrichtung zwei solche dynamischen Elemente (4, 4') umfasst, die mit einem jeweiligen Ende des primären Verbindungselements (2) verbunden sind.

8. Vorrichtung nach einem der vorhergehenden Ansprüche, **dadurch gekennzeichnet, dass** das primäre Verbindungselement (2) zwei Federelemente (5, 5') bildet.

9. Vorrichtung nach einem der vorhergehenden Ansprüche, **dadurch gekennzeichnet, dass** das primäre Verbindungselement (2) mit einem zentralen Teil desselben bezüglich der Struktur (1) fest montiert ist.

10. Vorrichtung nach einem der vorhergehenden Ansprüche, **dadurch gekennzeichnet, dass** die Vorrichtung wenigstens ein weiteres dynamisches Element (6, 6') umfasst, das drehbar mit einem sekundären Verbindungselement (7, 7') verbunden ist.

11. Vorrichtung nach Anspruch 10, **dadurch gekennzeichnet, dass** das sekundäre Verbindungselement (7, 7') drehbar mit einem äußeren Ende des primären Verbindungselements (2) verbunden ist.

12. Vorrichtung nach einem der Ansprüche 10 und 11, **dadurch gekennzeichnet, dass** die Vorrichtung wenigstens zwei weitere dynamische Elemente (6, 6') umfasst, die drehbar mit einem jeweiligen sekundären Verbindungselement (7, 7') verbunden sind.

13. Vorrichtung nach Anspruch 12, **dadurch gekennzeichnet, dass** die sekundären Verbindungselemente (7, 7') drehbar mit einem jeweiligen äußeren Ende des primären Verbindungselements (2) verbunden sind.

14. Vorrichtung nach einem der Ansprüche 10 bis 13, **dadurch gekennzeichnet, dass** die weiteren dynamischen Elemente (6, 6') drehbar auf einem jeweiligen äußeren Ende der sekundären Verbindungselemente (6, 6') gelagert sind.

15. Vorrichtung nach einem der Ansprüche 10 bis 14, **dadurch gekennzeichnet, dass** die sekundären Verbindungselemente (6. 6') das Federelement (5, 5') bilden.

16. Vorrichtung nach einem der vorhergehenden Ansprüche, **dadurch gekennzeichnet, dass** die Vorrichtung ein weiteres Federelement (5") umfasst, das das primäre Verbindungselement (2) mit der Struktur (1) verbindet.

17. Vorrichtung nach einem der vorhergehenden Ansprüche, **dadurch gekennzeichnet, dass** das Federelement (5) dazu ausgelegt ist, eine energieabsorbierende Federbewegung zu gestatten, die ein Biegen des Federelementes beinhaltet.

18. Vorrichtung nach einem der vorhergehenden Ansprüche, **dadurch gekennzeichnet, dass** das Federelement (5) dazu ausgelegt ist, eine energieabsorbierende Federbewegung zu gestatten, die eine Längsverformung des Federelementes beinhaltet.

19. Vorrichtung nach einem der vorhergehenden Ansprüche, **dadurch gekennzeichnet, dass** das Federelement (5) dazu ausgelegt ist, eine energieabsorbierende Federbewegung zu gestatten, die ein Scheren des Federelementes beinhaltet.

## Revendications

1. Dispositif pour réduire des vibrations et des sons dans une structure (1), comprenant
au moins un élément dynamique (4), qui s'étend le long de deux axes principaux (y, z),
au moins un élément à ressort (5), qui est relié à l'élément dynamique (4) et qui est adapté pour être relié à la structure (1), et
un élément de connexion principal (2), qui s'étend parallèlement à l'axe de rotation (x) et qui forme l'élément à ressort (5, 5'),
**caractérisé en ce que** l'élément dynamique présente un moment d'inertie de masse différent par rapport aux deux axes principaux (y, z), et
**en ce que** l'élément dynamique (4) peut tourner par rapport à la structure (1) autour de l'axe de rotation (x), qui est perpendiculaire aux deux axes principaux (y, z).

2. Dispositif selon la revendication 1, **caractérisé en ce que** l'élément à ressort (5), avec une partie de celui-ci, est monté de manière fixe par rapport à la structure (1).

3. Dispositif selon l'une quelconque des revendications 1 et 2, **caractérisé en ce que** les deux axes principaux (y, z) sont orthogonaux par rapport au moment d'inertie de masse.

4. Dispositif selon l'une quelconque des revendications précédentes, **caractérisé en ce que** l'élément dynamique (4) est tourillonné de manière rotative sur l'élément de connexion principal (2).

5. Dispositif selon la revendication 4, **caractérisé en ce que** l'élément dynamique (4) a une conception géométrique différente le long des deux axes principaux (y, z).

6. Dispositif selon l'une quelconque des revendications 4 et 5, **caractérisé en ce que** l'élément dynamique (4) présente une distribution de masse différente le long des deux axes principaux (y, z).

7. Dispositif selon l'une quelconque des revendications précédentes, **caractérisé en ce que** le dispositif comprend deux de ces éléments dynamiques (4, 4'), qui sont reliés à une extrémité respective de l'élément de connexion principal (2).

8. Dispositif selon l'une quelconque des revendications précédentes, **caractérisé en ce que** l'élément de connexion principal (2) forme deux éléments à ressort (5, 5').

9. Dispositif selon l'une quelconque des revendications précédentes, **caractérisé en ce que** l'élément de connexion principal (2), à l'aide d'une partie centrale de celui-ci, est monté de manière fixe par rapport à la structure (1).

10. Dispositif selon l'une quelconque des revendications précédentes, **caractérisé en ce que** le dispositif comprend au moins un élément dynamique supplémentaire (6, 6'), qui connecté de manière rotative à un élément de connexion secondaire (7, 7').

11. Dispositif selon la revendication 10, **caractérisé en ce que** l'élément de connexion secondaire (7, 7') est connecté de manière rotative à une extrémité extérieure de l'élément de connexion principal (2).

12. Dispositif selon l'une quelconque des revendications 10 et 11, **caractérisé en ce que** le dispositif comprend au moins deux éléments dynamiques supplémentaires (6, 6'), qui sont connectés de manière rotative à un élément de connexion secondaire respectif (7, 7').

13. Dispositif selon la revendication 12, **caractérisé en ce que** les éléments de connexion secondaires (7, 7') sont connectés de manière rotative à une extrémité extérieure respective de l'élément de connexion principal (2).

14. Dispositif selon l'une quelconque des revendications 10 à 13, **caractérisé en ce que** lesdits éléments dynamiques supplémentaires (6, 6') sont tourillonnés de manière rotative à une extrémité extérieure respective desdits éléments de connexion secondaires (6, 6').

15. Dispositif selon l'une quelconque des revendications 10 à 14, **caractérisé en ce que** lesdits éléments de connexion secondaires (6, 6') forment l'élément à ressort (5, 5').

16. Dispositif selon l'une quelconque des revendications précédentes, **caractérisé en ce que** le dispositif comprend un élément à ressort supplémentaire (5"), qui connecte l'élément de connexion principal (2) à la structure (1).

17. Dispositif selon l'une quelconque des revendications précédentes, **caractérisé en ce que** l'élément à ressort (5) est conçu pour permettre un mouvement de ressort absorbeur d'énergie qui comprend un cintrage de l'élément à ressort.

18. Dispositif selon l'une quelconque des revendications précédentes, **caractérisé en ce que** l'élément à ressort (5) est conçu pour permettre un mouvement de ressort absorbeur d'énergie, qui comprend une déformation longitudinale de l'élément à ressort.

19. Dispositif selon l'une quelconque des revendications précédentes, **caractérisé en ce que** l'élément à ressort (5) est conçu pour permettre un mouvement de ressort absorbeur d'énergie, qui comprend un cisaillement de l'élément à ressort.
